# EUROPEAN PATENT SPECIFICATION

(11) **EP 3 414 933 B1**
(45) Date of publication and mention of the grant of the patent: **09.08.2023**
(21) Application number: 16763178.7
(22) Date of filing: 31.08.2016
(51) Int. Cl.: H04W 24/10, H04L 5/00

(54) **SIGNALING FOR ENHANCED MEASUREMENT GAP FOR SYNCHRONOUS NETWORK**
SIGNALISIERUNG FÜR VERBESSERTE MESSLÜCKE FÜR SYNCHRONES NETZWERK
SIGNALISATION POUR INTERVALLE DE MESURE AMÉLIORÉ POUR RÉSEAU SYNCHRONE

(30) Priority: 12.02.2016 US 201662294862 P
(43) Date of publication of application: 19.12.2018
(73) Proprietor: Apple Inc., Cupertino, CA 95014 (US)
(72) Inventor: YIU, Candy, Portland, Oregon 97201 (US); TANG, Yang, Pleasanton, California 94588 (US); HUANG, Rui, Beijing 11 100085 (CN); HEO, Youn Hyoung, Seoul 11 150-705 (KR)
(74) Representative: Barnfather, Karl Jon
(86) International application number: PCT/US2016/049742
(87) International publication number: WO 2017/138985

(56) References cited:
- US-A1- 2014 341 192
- INTEL CORPORATION: "Motivation for new WI: measurement gap enhancement", 3GPP DRAFT; R4-160169, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. St. Julian's, Malta; 20160215 - 20160219 8 February 2016 (2016-02-08), XP051067638, Retrieved from the Internet: URL:http://www.3gpp.org/ftp/tsg_ran/WG4_Ra dio/TSGR4_78/Docs/ [retrieved on 2016-02-08]
- INTEL CORPORATION: "TP for TR 36.894: Proposals on measurement gap enhancement", 3GPP DRAFT; R4-158176, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Anaheim, US; 20151116 - 20151120 20 November 2015 (2015-11-20), XP051029239, Retrieved from the Internet: URL:http://www.3gpp.org/ftp/tsg_ran/WG4_Ra dio/TSGR4_77/Docs/ [retrieved on 2015-11-20]

## Description

### FIELD

The present disclosure relates to enhanced measurement gaps, and more specifically, signaling an enhanced measurement gap for a synchronous network.

### BACKGROUND

Wireless mobile communication technology uses various standards and protocols to transmit data between an access node (e.g., a transmission station) and a wireless device (e.g., a mobile device) or a user equipment (UE). Some wireless devices communicate using orthogonal frequency-division multiple access (OFDMA) in a downlink (DL) transmission and single carrier frequency division multiple access (SC-FDMA) in an uplink (UL) transmission. Standards and protocols that use orthogonal frequency-division multiplexing (OFDM) for signal transmission include the third generation partnership project (3GPP) long term evolution (LTE), the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi.

In 3GPP radio access network (RAN) LTE systems, the access node can be an Evolved Universal Terrestrial Radio Access Network (E-UTRAN) Node Bs (also commonly denoted as evolved Node Bs, enhanced Node Bs, eNodeBs, or eNBs) with or without one or more Radio Network Controllers (RNCs), which can communicate with the UE. The downlink (DL) transmission can be a communication from an access point / node or base station (e.g., a macro cell device, an eNodeB, an eNB, or other similar network device) to the UE, and the uplink (UL) transmission can be a communication from the wireless device to the node. In LTE, data can be transmitted from the eNB to the UE via a physical downlink shared channel (PDSCH). A physical uplink control channel (PUCCH) can be used to acknowledge that data was received. Downlink and uplink channels can also use time-division duplexing (TDD) or frequency-division duplexing (FDD) for network communication.

In LTE network communications, two DL synchronization signals are often used by the UE to obtain the cell identity and frame timing in order to then link to the network cell, namely the primary synchronization signal (PSS) and the secondary synchronization signal (SSS). The PSS is linked to the cell identity within a physical cell identity group. The SSS is linked to the cell identity group and the cell identity within the group. The PSS is mapped into the first 31 subcarriers either side of the direct current (DC) subcarrier, and thus, uses six resource blocks with normally five reserved subcarriers on each side of the DC subcarrier. The second SSS sequence used in each radio frame is scrambled with a binary scrambling code corresponding to the cyclic shift value of the first sequence transmitted in the radio frame. The SSS is transmitted in the same subframe as the PSS but one OFDM symbol earlier. The SSS is mapped to the same subcarriers (middle 72 subcarriers) as the PSS.

The PSS and SSS synchronization signals are utilized by the UE in synchronously connecting with the cell network of an eNB, or even for the UE to maintain its already gained synchronization. The eNB communicates reference signals (PSS and SSS) for the UE to measure the signal strength in LTE networks. These signals are sent periodically for each eNB, in which some of the networks will be synchronized and some networks will be asynchronized, with 6ms being a standard measurement gap by which the UE is enabled to measure. Within the 6ms measurement gap, the UE is believed to be able to target at least one of the synchronized signals from all neighboring cells or bands, which is part of the policy behind the current 6ms duration within the LTE network. In particular, the UE can cover measurements over an entire range of synchronized and asynchronized network signals associated with an eNB within 6 ms. However, for the UE to actually measure these signals, the entire 6 ms measurement gap is often not needed, especially in synchronous networks.

US 2014 341192 discloses a method for allocating a measurement gap configuration for UEs wherein a first measurement gap configuration is different from a second measurement gap configuration. A base station schedules measurement gaps between data communications of the UE with the network.

"Motivation for new WI: measurement gap enhancement" by Intel Corporation discloses synchronous only operations with network controlled small gap for interruption control.

"TP for TR 36.894: Proposals on measurement gap enhancement" by Intel Corporation discloses that an enhanced measurement gap configuration can be used with different measurement gap lengths with, for example, 4ms, 3ms and 2ms for both synchronous and asynchronous operations.

### BRIEF DESCRIPTION OF THE DRAWINGS

**FIG. 1** illustrates a block diagram illustrating an example wireless communications network environment for a UE or eNB according to various aspects or embodiments.
**FIG. 2** illustrates example system or device for operating network measurement gap patterns according to various aspects or embodiments.
**FIG. 3** illustrates an example network device for operating network measurement gap patterns according to various aspects or embodiments.
**FIG. 4** illustrates an example signaling flow for an enhanced measurement gap in an LTE network according to various aspects or embodiments.
**FIG. 5** illustrates an example measurement configuration information element for signaling an enhanced or non-enhanced measurement gap according to various aspects or embodiments.
**FIG. 6** illustrates an example measurement object information element according for signaling an enhanced or non-enhanced measurement gap to various aspects or embodiments.
**FIG. 7** illustrates an example measurement gap configuration information element for signaling an enhanced or non-enhanced measurement gap according to various aspects or embodiments.
**FIG. 8** illustrates a process flow for processing or generating enhanced and nonenhanced measurement gaps within a network according to various aspects or embodiments.

### DETAILED DESCRIPTION

The invention is set out in the appended set of claims.

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor, a process running on a processor, a controller, a circuit or a circuit element, an object, an executable, a program, a storage device, a computer, a tablet PC and/or a mobile phone with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components or elements without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising".

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some examples, the circuitry may be implemented in, or functions associated with the circuitry may be implemented by, one or more software or firmware modules. In some examples, circuitry may include logic, at least partially operable in hardware. OVERVIEW

In consideration of the above described deficiencies, network devices (e.g., macro cells, Access Points (APs), Access Controllers (ACs), eNBs, small cells, UEs, etc.) described herein can enable one or more specific measurement gap patterns and related solutions to support LTE carrier aggregation (CA) of a number of carrier components (CCs) for DL and UL. If a network device such as an eNB has knowledge that a connected network device (e.g., a UE communicatively connected to the eNB's network) is synchronized in its connection, then the measurement duration of 6 ms can be wasteful in it's duration for the UE because most of the reference signals will be pretty much already be aligned. This waste could then accumulate within the measurement gaps, where the UE cannot receive downlink signals, and introduces corruptions or interruptions for the UE to receive data.

As such, during a synchronized network operation, each UE can be configured to implement a specific measurement (an enhanced measurement gap) that differs from a standard measurement gap or a non-enhanced measurement gap. This re-configuration can operate, for example, to reduce the measurement gap length to about 2 ms, 3 ms or other shorter duration as an enhanced measurement gap for use in DL signaling.

Enhanced measurement gaps with shorter durations than non-enhanced measurement gaps can be dynamically configured for various UEs within or communicatively coupled to a cell network. Within the synchronized network of the macro network, an eNB can configured enhanced measurement gaps on a per UE basis, such that some UEs are optimized in their communications with a reduced duration for measurement gaps or measurement gap patterns, while others can operate measurement gap patterns for neighboring cell measurement or cell measurements according to a regular measurement gap and measurement gap patterns utilizing such measurement gap.

A measurement gap pattern can be referred to as the pattern of measurement gaps that the UE can facilitate frequency CC measurements on within a time period or duration (e.g., about 6 ms as a measurement gap, and less than 6 ms for an enhanced measurement gap). The UE, for example, can operate during a measurement gap to switch from a serving band it is connected on to a different band or CC in order to perform a measurement of the band or CC. The term serving band as used herein means the UE can be connected to that band as a serving band to receive downlink data on, in this case no measurement is necessarily required in that band because the UE is already operating in or on that band.

Additionally, a gap offset is referred to in order to indicate when a measurement gap starts of begins. Measurement gap length can be another term used to refer to a duration of the measurement gap, such as about 6 ms or about 7 ms, for example. A network controlled small gap (NCSP) can refer to a reduced gap duration, such as about 2 ms, 3 ms, or another shorter duration than the measurement gap (e.g., a nonenhanced measurement gap) that is standard of about 6 ms. The use of the phrase enhanced measurement gap can also be used interchangeably with NCSP or a reduced measurement gap duration, for example.

An eNB operates, via one or more components, to generate a first downlink communication to a first UE configured to indicate an enhanced measurement gap that is different than a non-enhanced measurement gap that is communicated to a second UE. In this network scenario, the first UE and the second UE are communicatively coupled to the eNB via a synchronous connection of a synchronous network, as opposed to an asynchronous network, which can be within the same macro cell or network enabled by the eNB. The eNBcommunicates the enhanced measurement gapvia one or more radio resource control (RRC) signals to the first UE.

In other aspects, a UE can operate, via one or more components, such as a communication component, comprising one or more communication chains corresponding to one or more component carriers (CCs), configured to process one or more radio RRC signals. A processor component, communicatively coupled to the communication component, can process the one or more RRC signals and determine whether to apply an enhanced measurement gap based on the RRC signals. Additional aspects and details of the disclosure are further described below with reference to figures.

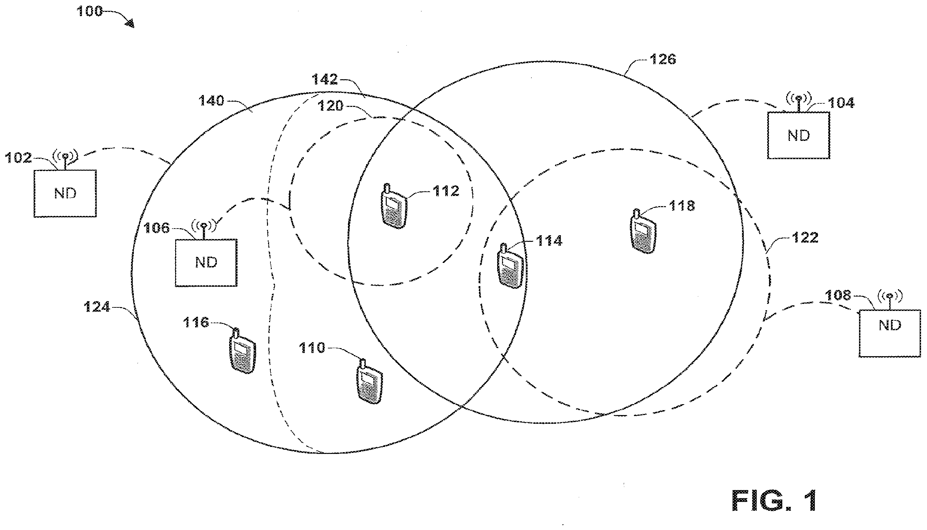

**FIG.** 1 illustrates an example non-limiting wireless communications environment 100 that can facilitate or enable one or more measurement gap configurations via communications between an eNB and UEs for LTE CA to support an enhanced measurement gaps (e.g., shorter measurement gaps about 2 ms, 3 ms, or otherwise) or a non-enhanced measurement gap (e.g., about 6 ms or 7 ms) for any number of frequency carriers or carrier components, either differently from one another or the same with enhanced measurement gaps at one time and non-enhanced at another time under different network conditions. The wireless communications environment 100 can include a multitude of wireless communication networks, each having a respective coverage area that can operate to serve different measurement gap configurations that utilize different measurement gap lengths depending upon the network.

Wireless communications environment 100 can includes one or more cellular broadcast servers or macro cell network devices 102, 104 (e.g., base stations, eNBs, access points (APs) or the like) and one or more small cell network devices or APs (e.g., small eNBs, micro-eNBs, pico-eNBs, femto-eNBs, home eNBs (HeNBs), or Wi-Fi nodes) 106, 108 deployed within the wireless communications environment 100 and servicing one or more UE devices 110, 112, 114, 116, 118. Each wireless communications network (e.g., cellular broadcast servers 102, 104 and small cell network devices 106, 108) can comprise one or more network devices (e.g., a set of network devices (NDs)) that operate in conjunction in order to process network traffic for the one or more UE devices 110, 112, 114, 116, or 118. For example, macro cell NDs 102, 104 can comprise a set of network devices that are cellular enabled network devices. In another example, the small cell network devices 106, 108 can include a set of network devices that operate with a smaller coverage zone than the macro cell network devices 102 and 102, for example.

Although NDs 106 and 108 are described as small cell network devices, they can also be Wi-Fi enabled devices or wireless local area network (WLAN) devices, as well as macro cell network devices, small cell network devices, or some other type of ND operable as a base station, eNB, or secondary cell network device for example. Alternatively one or more of the macro cell NDs 102 and 104 could be small cell network devices or other NDs of a different radio access technology (RAT) that operate with different frequency carriers, for example.

As illustrated, each of the one or more Wi-Fi access points 106, 108 can have a corresponding service area 120, 122. Additionally, each of the one or more cellular broadcast servers or macro cell NDs 102, 104 can have a corresponding service area 124, 126. However, it should be understood that the wireless communications environment 100 is not limited to this implementation. For example, any number of APs or NDs with respective service areas can be deployed within the wireless communications environment 100. Further, any number of cellular broadcast servers and respective service areas can be deployed within the wireless communications environment 100 as well.

Although only five UE devices 110, 112, 114, 116, 118 are illustrated, any number of UE devices can be deployed within the wireless communications environment 100 as well. A UE device can contain some or all of the functionality of a system, subscriber unit, subscriber station, mobile station, mobile, wireless terminal, device, mobile device, remote station, remote terminal, access terminal, user terminal, terminal, wireless communication device, wireless communication apparatus, user agent, user device, or other ND, for example.

In one aspect, cellular broadcast servers or macro cell NDs 102, 104 and small cell NDs 106, 108 can monitor their surrounding radio conditions (e.g., by employing respective measurement components). For example, each of the macro cell NDs 102, 104 and small cell NDs 106, 108 can determine network traffic load on its respective network by performing a network diagnostic process. As an example, during a network listen procedure, macro cell NDs 102, 104, small cell NDs 106, 108 or UE devices 110, 112, 114, 116, 118 can scan their radio environment to determine network performance statistics or network parameters (e.g., frequency, SNR, signal quality, QoS, QoE, load, congestion, signal rate, etc.). Various parameters associated with macro cell NDs 102, 104 and small cell NDs 106, 108 can be detected during the network diagnostic procedure or measurements by the UE devices, such as, but not limited to, frequency bands, scrambling codes, common channel pilot power, bandwidth across respective networks, universal mobile telecommunications system terrestrial radio access receive signal strength indicator, as well as frequency carrier priorities for particular cell groups (e.g., a normal group or a reduced group) and so on.

In an example scenario, UE devices 110, 112, 114, 116, 118 can be serviced by networks through one of the macro cell NDs 102, 104, or small cell NDs 106, 108. As a user equipment device is moved within the wireless communications environment 100, the respective user equipment device might be moved in and out of the coverage area of the associated serving network. For example, as a user is sending/receiving communications through their respective UE device, the user might be walking, riding in a car, riding on a train, moving around a densely populated urban area (e.g., a large city), wherein the movement could cause the mobile device to be moved between various wireless communication networks. In such cases, it is beneficial for the UE to route the network traffic (e.g., handoff) from a serving ND to a target ND in order to continue the communication (e.g., avoid dropped calls) or facilitating offloading for load distribution or other efficiency purposes. However, with an increased number of NDs and frequency carriers to measure, UE devices 110, 112, 114, 116, 118 can have a problem being able to measure each carrier within allotted time measurement gaps, and when already synchronous with a particular eNB further waste time conducting measurement within measurement gap durations that are excessive. Because the UE devices 110, 112, 114, 116, 118 have to measure an increasingly greater number of carriers (e.g., 32 or greater), the measurement gaps can introduce more delay.

In one example, the network 124 corresponding to the service area of eNB 102 can include different networks depending on the synchronous connection of the UE with the eNB 102. For example, the network or service area 124 can include portions of a network or service area 140 operating as a synchronous network, in which the UE 116 is synchronously connected thereat with a band or CC, and network 142 operating as an asynchronous network, in which the UE 110 is asynchronously connected thereat with a band or CC. In a synchronous connection, such as with the UE 116 to the eNB 102, the clocking of the data can be transmitted with data together, in the asynchronous connection, such as with the UE 110 and the eNB 102, the clocking mechanisms or times are independent of one another between receiver and transmitter of the UE 110 and eNB 102, for example.

As such, for UEs 116 and 110 within the network service area 124, the UE 116 can be configured by the eNB 102 to operate with an enhanced measurement gap of less duration or length than a non-enhanced measurement gap. While at the same time, or concurrently, the UE 110 can be configured by the eNB 102 to operate with a nonenhanced measurement gap that is longer in duration than the enhanced measurement gap. The enhanced measurement gap comprises about 2 ms, 3 ms or, in alternative examples, other shorter duration than about 6 ms or 7 ms, which is a non-enhanced measurement gap duration, for example.

In one example, two frequency carriers (e.g., CCs for LTE CA) of different frequencies can exist on the network environment 100, where 40 milliseconds (ms) can be the measurement gap reception period (MGRP), or some other period, such as 40 ms, 80 ms, or other gap period, for example. Because there are two CCs or more, for example, when supporting carrier aggregation, the UE devices 110, 112, 114, 116, 118 could operate on one carrier, which is the serving frequency, and thus with a single radio receiver / transmitter could measure one additional carrier. As such, every 40ms the UE (e.g., UE 110), for example, the UEs 110, 112, 114, 116, 118 can switch to another carrier to perform measurements thereon as a neighboring carrier or a neighboring network band. This means that every 40ms that the UE 110, for example, could measure once for a given MGRP, which can include a measurement gap to the DL communications on the serving band, in which as a measurement gap no DL data is being received by the UE on this serving band for it to measure the other neighboring band, for example. As such, if the measurement gap associated with the measuring operation during the given MGRP (e.g., 40 ms or other duration) is reduced as an enhanced measurement gap for a particular UE. As a result of the shorter or enhanced measurement gaps being signaled by the eNB 102 to the UE 116, for example, a cumulative time savings over a defined time could be exponential, or at least very significant in terms of resource savings and DL data throughput. The waste can thus accumulate within the measurement gaps, where the UE cannot receive downlink signals, and introduces corruptions or interruptions for the UE to receive data.

An enhanced measurement gap can be particularly useful for UEs (e.g., UE 116) within a synchronous network 140 where the UE 116 already has a synchronized connection and is aligned with the SSS and PSS synchronized signals sent by the eNB 102. The UE 116 can thus utilize shorter measurement gaps without having to utilize the full duration of a non-enhanced measurement gap. Because DL data is reduced or no data is received on downlink during measurement gap, particular with UEs (e.g., 116) with a single chain receiver corresponding with a single CC or band of operation, then delays do not accumulate as significantly as a result of the shorter / enhanced measurement gap configurations.

The eNB 102, for example, communicates the reference signals for the UE to measure. At each measurement sample, measurements could comprise any network measurement of network conditions related to the frequency band, network device operating (communicating) the frequency band, or channel conditions, such as a signal strength, a channel quality, a signal-to-noise-plus interference ratio (SINR), a received signal strength indictor (RSSI) or other measurement such as a reference signal received power (RSRP), a reference signal received quality (RSRQ), or the like. The UE can then generate channel state information (CSI), one or more channel quality indicators (CQIs) or the like to a transmission path for transmission based on one or more of the measurements. The synchronous signals are sent periodically by each eNB or NO 102, 104, for example, and some of the network will be synchronized (e.g., at 140) and some asynchronized (e.g., 142), but within the 6ms of non-enhanced measurement gap the UEs 116 or 110 are expected to be able to hit at least one of the synchronized signals from all the neighboring cells, which is one policy behind the current, approximately 6ms duration as standard currently within the LTE networks.

In another example, the eNB 102 can determine or operate to ascertain whether the UEs 116 and 110 are synchronized or not. If a UE's network is a synchronized network 140, then the eNB 102 can signal to the individual UE 116 to use the enhanced measurement gap configuration to reduce the measurement gap duration to 2 ms or 3 ms. Different ways for the network to configure or signal this enhanced measurement gap to reduce the size of the measurement gap for a particular UE 116 and a different non-enhanced measurement gap for another UE 110, can be utilized by the eNB 102. Alternatively or additionally, the eNB 102 can signal an enhanced measurement gap to trigger or configure the UE 116 to utilize at one time and then a non-enhanced measurement gap to be utilized at another time based on changing network conditions (e.g., movement from a synchronized network connection 140 to an asynchronous network connection 142, or other changing network parameters). Alternatively or additionally, the eNB 102 can signal the UEs 116 and 110 differently at the same time to utilize different measurement gaps (enhanced or non-enhance) and modify these measurement gaps as each of them experiences different network conditions.

The eNB 102 can also utilize different signaling mechanisms for configuring the UEs 116 and 110 with different measurement gaps. In one example, UEs 116 and 110, for example, can be preconfigured to receive signaling from an eNB 102 with prior knowledge of an enhanced measurement gap duration in a standards specification. If the UE 116 is preconfigured to use an enhanced measurement gap, for example, then it could be either 2 or 3 ms in duration, which can be activated in response to a signaling by the eNB 102, such as via a one bit signal to indicate or configured an enhanced measurement gap at that particular UE 116.

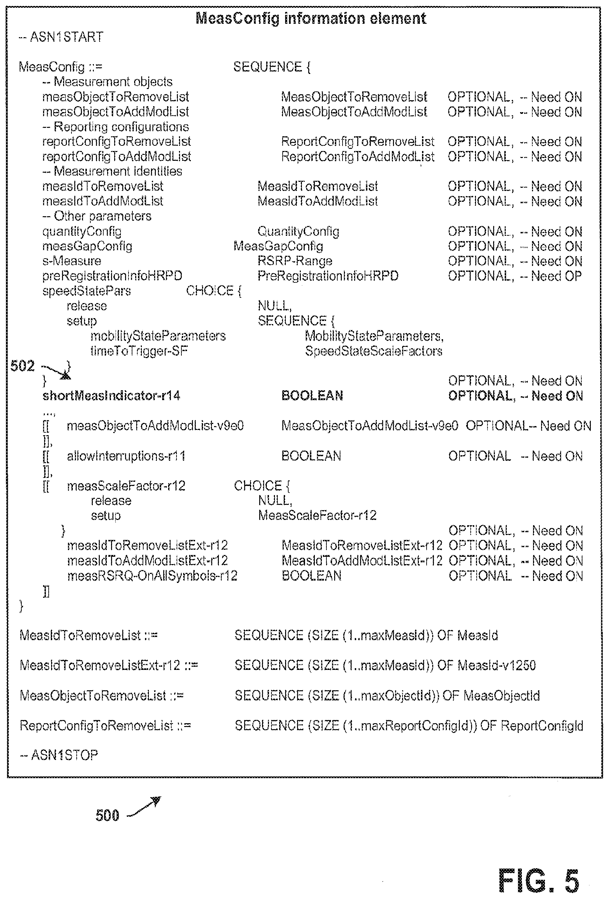

The one bit indication is added in the measurement information element (IE), which is illustrated in **FIG. 5** as a short measurement indication 502 (e.g., shortMeaslndicator-r14), such as for 3GPP release 14 (r14). In response to the UE 116 receiving the indication (e.g., a one bit in a MeasConfig / MeasGapConfig IE, or a MeasObjectEUTRA IE) to trigger utilizing an enhanced measurement gap for band measurements, neighbor cell measurements, or for different CCs, and the UE 116 being within a synchronized network 140, then the UE 116 can alter / modify measurement gaps to be within the enhanced measurement gap duration (e.g., 2 ms, 3 ms, or other shorter duration) from a non-enhanced measurement gap configuration (e.g., about 6 ms or 7 ms). The IE MeasConfig or measconfig can generally specify measurement(s) to be performed by the UE, covering intra-frequency, inter-frequency and inter-RAT mobility as well as the configuration of the measurement gaps (enhanced or nonenhanced), which can be further defined in 3GPP TS 36.331, for example.

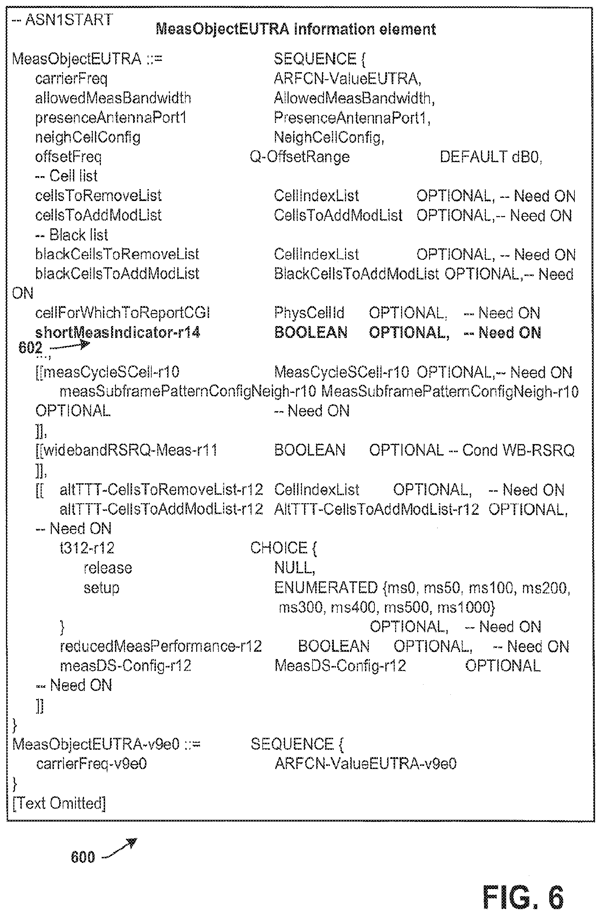

In another example, a one bit indication to implement the enhanced measurement gap can be configured and provided by the communication of a measurement object (e.g., MeasObject) by the eNB 102 to the UE 116, which is illustrated for example at **FIG. 6****.** For each measurement gap (enhanced or nonenhanced), the eNB 102 can configure measurement objects for individual different carriers, frequency bands, or different cells. The different cells, for example can be evolved universal terrestrial radio access (EUTRA) cells or networks of a EUTRA protocol. So if a network for a particular frequency is synchronized and such synchronicity is known / determined by the eNB 102, then the eNB 102 can configure this measurement object (MeasObjectEUTRA ID) such as shortMeaslndicator-r14 602 to be used within or for a shorter measurement gap. For example, the eNB 102 can utilize the measurement object EUTRAN IE and inside this IE configure the short measurement indicator of one bit for a particular UE 116 to use on the network or a CC for measuring. A single measurement object can be configured per radio frequency (RF) carrier or cell, for example, or be applied to any and all bands, CCs or EUTRA cells, for example, especially for inter-frequency EUTRA bands, CCs or cells.

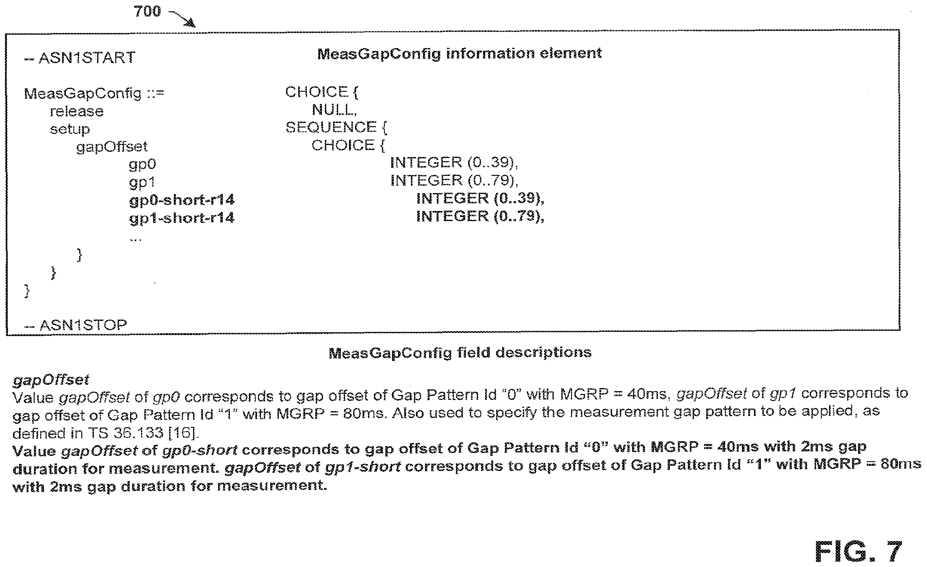

In another example, instead of using one bit, the eNB 102 can generate be one or more (e.g., two) different measurement gap durations for any measurement gap configurations in the MeasurementGapConfig or MeasGapConfig IE, which is illustrated in more detail at **FIG. 7****.** As such, different measurement gap patterns can be signaled to the UE 116. In response to receiving the MeasGapConfig IE 700, for example, the UE 116 can measure bands or CCs utilizing at least two different patterns with different enhanced measurement gaps or shorter durations than otherwise would with a nonenhanced measurement gap. As such, a better optimization of time and resources can be configured dynamically and when already synchronized via the synchronous network 140 or a synchronous connection with the eNB 102.

In one example of the measurement gap configuration information element (MeasGapConfig IE), an indication of 0 and 1 for measurement gaps, can be provided by the eNB 102 to indicate enhanced measurement gaps for 40 ms and 80 ms periodic measurement periods / MGRPs depending on the configuration of the information element (e.g., a MeasGapConfig IE as in TS 36.331, or a measurement gap object (MeasObjectEUTRA IE), such as referred to in TS 36.133). As such, the eNB 102 can configure a communication to the UE 116 of either a shorter gap for 40 ms, for 80 ms, and other periods at the same time or concurrently when in a synchronous network. For example, an indication for each period of 40 ms and 80 ms can be signaled by a zero or one for each to the UE 116 and signal the UE to measure shorter or enhanced measurement gaps therein depending on which period is being configured for measurement reporting. As such, a shorter / enhanced measurement gap can be configured for gap offsets or MGRPs at 40 ms and not for 80 ms (with non-enhanced measurement gaps) or vice versa, enhanced measurement gaps for both 40 ms and 80 ms, or neither MGRP with an enhanced measurement gap, but instead a non-enhanced measurement gap, depending on the state of the bit(s) for each MGRP.

The MeasGapConfig IE can be communicated by the eNB 102 to the UE 116, for example, with various field descriptions, such as a gap offset (gapOffset) corresponding to different measurement gap patterns with either an enhanced measurement gap or a non-enhanced measurement gap as illustrated in FIG. 7. A gapOffset can have a value of gpO that corresponds, for example, to a gap offset of a measurement gap pattern (Gap Pattern ID "0") with a MGRP = to 40 ms, while gapOffset of gp1 corresponds to a gap offset of a gap pattern (Gap Pattern ID "1") with MGRP = 80 ms. These designations or formulations are also used to specify the measurement gap pattern to be applied, as defined in TS 36.133, for example. A gap offset of gpO-short can correspond to a gap offset of a Gap Pattern ID "0" with MGRP - 40 ms with 2 ms duration for the measurement / measurement gap. A gap offset (gapOffset) of gp1-short corresponds to a gap offset of a Gap Pattern ID "1" with MGRP = 80 ms with a 2 ms gap duration for measurement. Other durations than 2 ms can also be indicated as well that are shorter than a non-enhanced measurement gap of about 6 ms, for example. The gap pattern is not particularly discussed herein, but can refer to the sequence of measurement on one band or another band, while not receiving or only partially receiving DL data, such as with a single receive chain corresponding to a frequency range or multiple different receiver chains. The gap pattern Id can provide indication of the particular measurement gap pattern, for example.

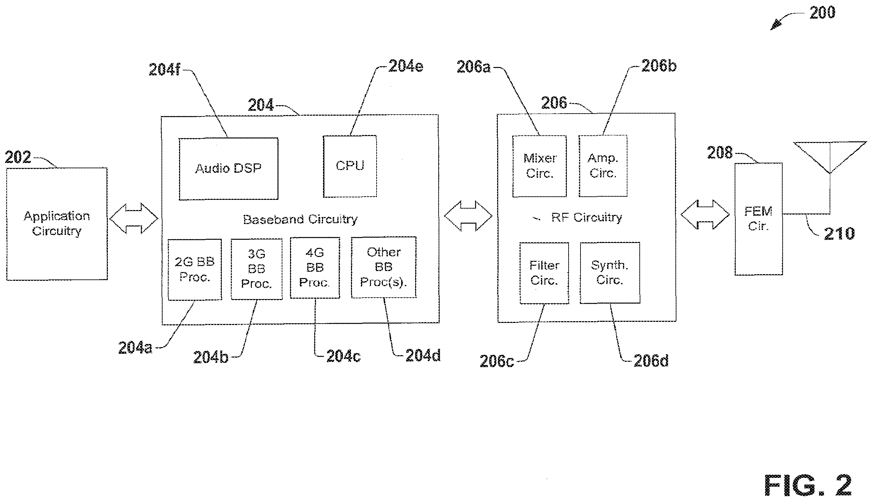

Examples described herein can be implemented into a system using any suitably configured hardware / software. **FIG. 2** illustrates, for one example, example components of a cell network device 200, such as a base station, a macro cell network device, a secondary cell network device, a small cell network device, an evolved/enhanced NodeB (eNB), or any other network device (e.g. a user equipment, pico cell, Femto cell or the like). In some examples, the cell network device 200 can include application circuitry 202, baseband circuitry 204, Radio Frequency (RF) circuitry 206, front-end module (FEM) circuitry 208 and one or more antennas 210, coupled together at least as shown.

The application circuitry 202 can include one or more application processors. For example, the application circuitry 202 can include circuitry such as, but not limited to, one or more single-core or multi-core processors. The processor(s) can include any combination of general-purpose processors and dedicated processors (e.g., graphics processors, application processors, etc.). The processors can be coupled with and/or can include memory / storage and can be configured to execute instructions stored in the memory/storage to enable various applications and/or operating systems to run on the system.

The baseband circuitry 204 can include circuitry such as, but not limited to, one or more single-core or multi-core processors. The baseband circuitry 204 can include one or more baseband processors and/or control logic to process baseband signals received from a receive signal path of the RF circuitry 206 and to generate baseband signals for a transmit signal path of the RF circuitry 206. Baseband processing circuity 204 can interface with the application circuitry 202 for generation and processing of the baseband signals and for controlling operations of the RF circuitry 206. For example, in some examples, the baseband circuitry 204 can include a second generation (2G) baseband processor 204a, third generation (3G) baseband processor 204b, fourth generation (4G) baseband processor 204c, and/or other baseband processor(s) 204d for other existing generations, generations in development or to be developed in the future (e.g., fifth generation (5G), 6G, etc.). The baseband circuitry 204 (e.g., one or more of baseband processors 204a-d) can handle various radio control functions that enable communication with one or more radio networks via the RF circuitry 206. The radio control functions can include, but are not limited to, signal modulation/demodulation, encoding/decoding, radio frequency shifting, etc. In some examples, modulation/demodulation circuitry of the baseband circuitry 204 can include Fast-Fourier Transform (FFT), precoding, and/or constellation mapping / demapping functionality. In some examples, encoding/decoding circuitry of the baseband circuitry 204 can include convolution, tail-biting convolution, turbo, Viterbi, and/or Low Density Parity Check (LDPC) encoder/decoder functionality. Examples of modulation/demodulation and encoder/decoder functionality are not limited to these examples and can include other suitable functionality in other examples.

In some examples, the baseband circuitry 204 can include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 204e of the baseband circuitry 204 can be configured to run elements of the protocol stack for signaling of the PHY, MAC, RLC, PDCP and/or RRC layers. In some examples, the baseband circuitry can include one or more audio digital signal processor(s) (DSP) 204f. The audio DSP(s) 204f can be include elements for compression/decompression and echo cancellation and can include other suitable processing elements in other examples. Components of the baseband circuitry can be suitably combined in a single chip, a single chipset, or disposed on a same circuit board in some examples. In some examples, some or all of the constituent components of the baseband circuitry 204 and the application circuitry 202 can be implemented together such as, for example, on a system on a chip (SOC).

In some examples, the baseband circuitry 204 can provide for communication compatible with one or more radio technologies. For example, in some examples, the baseband circuitry 204 can support communication with a EUTRAN and/or other wireless metropolitan area networks (WMAN), a wireless local area network (WLAN), a wireless personal area network (WPAN). Examples in which the baseband circuitry 204 is configured to support radio communications of more than one wireless protocol can be referred to as multi-mode baseband circuitry.

RF circuitry 206 can enable communication with wireless networks using modulated electromagnetic radiation through a non-solid medium. In various examples, the RF circuitry 206 can include switches, filters, amplifiers, etc. to facilitate the communication with the wireless network. RF circuitry 206 can include a receive signal path which can include circuitry to down-convert RF signals received from the FEM circuitry 208 and provide baseband signals to the baseband circuitry 204. RF circuitry 206 can also include a transmit signal path which can include circuitry to up- convert baseband signals provided by the baseband circuitry 204 and provide RF output signals to the FEM circuitry 208 for transmission.

In some examples, the RF circuitry 206 can include a receive signal path and a transmit signal path. The receive signal path of the RF circuitry 206 can include mixer circuitry 206a, amplifier circuitry 206b and filter circuitry 206c. The transmit signal path of the RF circuitry 206 can include filter circuitry 206c and mixer circuitry 206a. RF circuitry 206 can also include synthesizer circuitry 206d for synthesizing a frequency for use by the mixer circuitry 206a of the receive signal path and the transmit signal path. In some examples, the mixer circuitry 206a of the receive signal path can be configured to down-convert RF signals received from the FEM circuitry 208 based on the synthesized frequency provided by synthesizer circuitry 206d. The amplifier circuitry 206b can be configured to amplify the down-converted signals and the filter circuitry 206c can be a low-pass filter (LPF) or band-pass filter (BPF) configured to remove unwanted signals from the down-converted signals to generate output baseband signals. Output baseband signals can be provided to the baseband circuitry 204 for further processing. In some examples, the output baseband signals can be zerofrequency baseband signals, although this is not a requirement. In some examples, mixer circuitry 206a of the receive signal path can comprise passive mixers, although the scope of the examples is not limited in this respect.

In some examples, the mixer circuitry 206a of the transmit signal path can be configured to up-convert input baseband signals based on the synthesized frequency provided by the synthesizer circuitry 206d to generate RF output signals for the FEM circuitry 208. The baseband signals can be provided by the baseband circuitry 204 and can be filtered by filter circuitry 206c. The filter circuitry 206c can include a low-pass filter (LPF), although the scope of the examples is not limited in this respect.

In some examples, the mixer circuitry 206a of the receive signal path and the mixer circuitry 206a of the transmit signal path can include two or more mixers and can be arranged for quadrature down-conversion or up-conversion respectively. In some examples, the mixer circuitry 206a of the receive signal path and the mixer circuitry 206a of the transmit signal path can include two or more mixers and can be arranged for image rejection (e.g., Hartley image rejection). In some examples, the mixer circuitry 206a of the receive signal path and the mixer circuitry 206a can be arranged for direct down-conversion or direct up-conversion, respectively. In some examples, the mixer circuitry 206a of the receive signal path and the mixer circuitry 206a of the transmit signal path can be configured for super-heterodyne operation.

In some examples, the output baseband signals and the input baseband signals can be analog baseband signals, although the scope of the examples is not limited in this respect. In some alternate examples, the output baseband signals and the input baseband signals can be digital baseband signals. In these alternate examples, the RF circuitry 206 can include analog-to-digital converter (ADC) and digital-to-analog converter (DAC) circuitry and the baseband circuitry 204 can include a digital baseband interface to communicate with the RF circuitry 206.

In some dual-mode examples, a separate radio IC circuitry can be provided for processing signals for each spectrum, although the scope of the examples is not limited in this respect.

In some examples, the synthesizer circuitry 206d can be a fractional-N synthesizer or a fractional N/N+2 synthesizer, although the scope of the examples is not limited in this respect as other types of frequency synthesizers can be suitable. For example, synthesizer circuitry 206d can be a delta-sigma synthesizer, a frequency multiplier, or a synthesizer comprising a phase-locked loop with a frequency divider.

The synthesizer circuitry 206d can be configured to synthesize an output frequency for use by the mixer circuitry 206a of the RF circuitry 206 based on a frequency input and a divider control input. In some examples, the synthesizer circuitry 206d can be a fractional N/N+2 synthesizer.

In some examples, frequency input can be provided by a voltage controlled oscillator (VCO), although that is not a requirement. Divider control input can be provided by either the baseband circuitry 204 or the applications processor 202 depending on the desired output frequency. In some embodiments, a divider control input (e.g., N) can be determined from a look-up table based on a channel indicated by the applications processor 202.

Synthesizer circuitry 206d of the RF circuitry 206 can include a divider, a delaylocked loop (DLL), a multiplexer and a phase accumulator. In some examples, the divider can be a dual modulus divider (DMD) and the phase accumulator can be a digital phase accumulator (DPA). In some examples, the DMD can be configured to divide the input signal by either N or N+2 (e.g., based on a carry out) to provide a fractional division ratio. In some examples, the DLL can include a set of cascaded, tunable, delay elements, a phase detector, a charge pump and a D-type flipflop. In these examples, the delay elements can be configured to break a VCO period up into Nd equal packets of phase, where Nd is the number of delay elements in the delay line. In this way, the DLL provides negative feedback to help ensure that the total delay through the delay line is one VCO cycle.

In some examples, synthesizer circuitry 206d can be configured to generate a carrier frequency as the output frequency, while in other examples, the output frequency can be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some examples, the output frequency can be a LO frequency (fLO). In some examples, the RF circuitry 206 can include an IQ/polar converter.

FEM circuitry 208 can include a receive signal path which can include circuitry configured to operate on RF signals received from one or more antennas 210, amplify the received signals and provide the amplified versions of the received signals to the RF circuitry 206 for further processing. FEM circuitry 208 can also include a transmit signal path which can include circuitry configured to amplify signals for transmission provided by the RF circuitry 206 for transmission by one or more of the one or more antennas 210.

In some examples, the FEM circuitry 208 can include a TX/RX switch to switch between transmit mode and receive mode operation. The FEM circuitry can include a receive signal path and a transmit signal path. The receive signal path of the FEM circuitry can include a low-noise amplifier (LNA) to amplify received RF signals and provide the amplified received RF signals as an output (e.g., to the RF circuitry. The transmit signal path of the FEM circuitry 208 can include a power amplifier (PA) to amplify input RF signals (e.g., provided by RF circuitry 206), and one or more filters to generate RF signals for subsequent transmission (e.g., by one or more of the one or more antennas 210.

In some examples, the cell network device 200 can include additional elements such as, for example, memory/storage, display, camera, sensor, and/or input/output (I/O) interface. In some examples, the electronic device of Figure 2 may be configured to perform one or more processes, techniques, and/or methods as described herein, or portions thereof.

In other examples, the network device 200 can operate to generate / process measurement gap enhancement as an enhanced measurement gap with a single Rx chain. This includes, but not limited to, an increased UE scheduling opportunity or reduced UE power consumption. In particular, for synchronous only operation, the measurement gap configurations with reduced measurement gap lengths can be generated and processed with the lengths being configured via one or more information elements (e.g., MeasConfig IEs, MeasObjectEUTRA lEs, MeasGapConfig lEs, or otherwise). The eNB 102 as the network device 200 can provide a per component carrier configuration of measurement gaps with different CCs or cells utilizing different measurement gap lengths (enhanced or non-enhanced measurement gaps) via the same UE 116, for example, or via different UEs 116 and 110, within a synchronous network. In the per CC based measurement gap configuration, MGRP can be configured independently per CC. This can also include the case where the measurement gaps are configured for some of CC, but not configured for the other CC. Network controlled small gap (NCSG) or enhanced measurement gaps as discussed herein can be introduced when per CC measurement gap configurations are configured to reduce the Ack / Nack missing rate due to primary cell (PCell) / secondary cell (SCell) / primary secondary cell (PSCell) interruption. Whether the UE 116, for example, should report its capabilities on per CC based measurement gaps can further be under the network control via the eNB 102, for example.

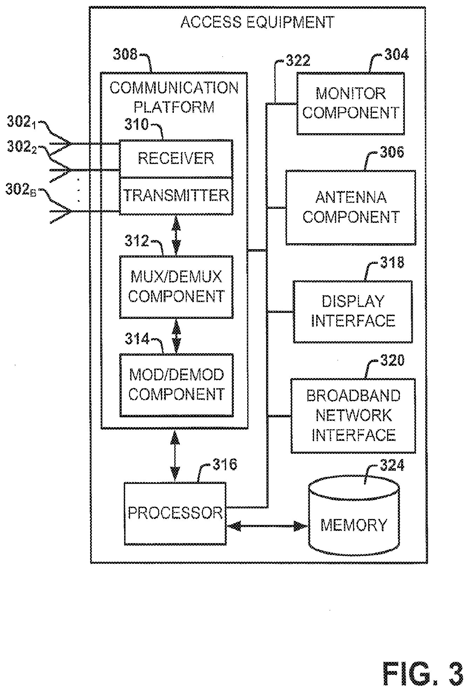

**FIG.** 3 further illustrates an embodiment of a network device or system 300 to be employed in an eNB, a UE or other network device that facilitates or enables signaling mechanisms to process or provide enhanced measurement gaps of shorter duration than non-enhanced measurement gaps. System or device 300 can include the baseband circuitry component 204, the radio frequency (RF) circuitry component 206, or a front end module circuitry component 308 of FIG. 2, as well as communication component or platform 308 with transmitter circuitry component(s) / receiver circuitry component 310 (e.g., a communication component), a processor 316 and memory 324.

In various aspects, system 300 can be included within an Evolved Universal Terrestrial Radio Access Network (E-UTRAN) Node B (Evolved Node B, eNodeB, or eNB 102), other base station, network access point, a secondary cell network device (e.g., a small cell, or WiFi network device) or other cell network component/device (e.g., UE 116 and 110) in a wireless communications network (e.g., network 124). Memory 324 also can include instructions that can be implemented by processor 316, transmitter circuitry 310, or receiver circuitry 310 to implement various aspects described herein.

Memory 324 can comprise one or more machine-readable medium / media including instructions that, when performed by a machine or component herein cause the machine to perform acts of the method or of an apparatus or system for concurrent communication using multiple communication technologies according to examples described herein. It is to be understood that aspects described herein can be implemented by hardware, software, firmware, or any combination thereof. When implemented in software, functions can be stored on or transmitted over as one or more instructions or code on a computer-readable medium (e.g., the memory described herein or other storage device). Computer-readable media includes both computer storage media and communication media including any medium that facilitates transfer of a computer program from one place to another. A storage media or a computer readable storage device can be any available media that can be accessed by a general purpose or special purpose computer. By way of example, and not limitation, such computer-readable media can comprise RAM, ROM, EEPROM, CDROM or other optical disk storage, magnetic disk storage or other magnetic storage devices, or other tangible and/or non-transitory medium, that can be used to carry or store desired information or executable instructions. Also, any connection is properly termed a computer-readable medium. For example, if software is transmitted from a website, server, or other remote source using a coaxial cable, fiber optic cable, twisted pair, digital subscriber line (DSL), or wireless technologies such as infrared, radio, and microwave, then coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where *disks* usually reproduce data magnetically, while *discs* reproduce data optically with lasers. Combinations of the above should also be included within the scope of computer- readable media. As described in greater detail below, system 300.

Access equipment (e.g., eNB, network entity, or the like), UE or software related to access of the network device 300 can receive and transmit signal(s) from and to wireless devices, wireless ports, wireless routers, etc. through segments 302l-302_{B} (B is a positive integer). Segments 302I-302_{B} can be internal and/or external to access equipment and/or software related to access of a network, and can be controlled by a monitor component 304 and an antenna component 306. Monitor component 304 and antenna component 306 can couple to communication component 308, which can include electronic components and associated circuitry that provide for processing and manipulation of received signal(s) and other signal(s) to be transmitted.

In an aspect, communication component 308 includes the receiver/transmitter 310 that can convert analog signals to digital signals upon reception of the analog signals, and can convert digital signals to analog signals upon transmission. In addition, receiver / transmitter 310 can divide a single data stream into multiple, parallel data streams, or perform the reciprocal operation. Coupled to receiver/transmitter 310 can be a multiplexer / demultiplexer 312 that can facilitate manipulation of signals in time and frequency space. Multiplexer / demultiplexer 312 can multiplex information (data/traffic and control/signaling) according to various multiplexing schemes such as time division multiplexing, frequency division multiplexing, orthogonal frequency division multiplexing, code division multiplexing, space division multiplexing. In addition, multiplexer/ demultiplexer component 312 can scramble and spread information (e.g., codes, according to substantially any code known in the art, such as Hadamard-Walsh codes, Baker codes, Kasami codes, polyphase codes, and so forth).

A modulator / demodulator 314 can also be a part of communication component / platform 308, and can modulate information according to multiple modulation techniques, such as frequency modulation, amplitude modulation (e.g., Mary quadrature amplitude modulation, with M a positive integer); phase-shift keying; and so forth).

Access equipment and/or software related to access of a network also includes a processor 316 (or processor component) configured to confer, at least in part, functionality to substantially any electronic component in access equipment and/or software. In particular, processor 316 can facilitate configuration of access equipment and/or software through, for example, monitor component 304, antenna component 306, and one or more components therein. Additionally, access equipment and/or software can include display interface 318, which can display functions that control functionality of access equipment and/or software or reveal operation conditions thereof. In addition, display interface 318 can include a screen to convey information to an end user. In an aspect, display interface 318 can be a liquid crystal display, a plasma panel, a monolithic thin-film based electrochromic display, and so on. Moreover, display interface 318 can include a component (e.g., speaker) that facilitates communication of aural indicia, which can also be employed in connection with messages that convey operational instructions to an end user. Display interface 318 can also facilitate data entry (e.g., through a linked keypad or through touch gestures), which can cause access equipment and/or software to receive external commands (e.g., restart operation).

Broadband network interface 320 facilitates connection of access equipment or software to a service provider network (not shown) that can include one or more cellular technologies (e.g., third generation partnership project universal mobile telecommunication system, global system for mobile communication, and so on) through backhaul link(s) (not shown), which enable incoming and outgoing data flow. Broadband network interface 320 can be internal or external to access equipment and/or software and can utilize display interface 318 for end-user interaction and status information delivery.

Processor 316 can be functionally connected to communication platform 308 and can facilitate operations on data (e.g., symbols, bits, or chips) for multiplexing/demultiplexing, such as effecting direct and inverse fast Fourier transforms, selection of modulation rates, selection of data packet formats, inter-packet times, and so on. Moreover, processor 316 can be functionally connected, through data, system, or an address bus 322, to display interface 318 and broadband network interface 320, to confer, at least in part, functionality to each of such components.

In access equipment and/or software memory 324 can retain location and/or coverage area (e.g., macro sector, identifier(s)) access list(s) that authorize access to wireless coverage through access equipment and/or software sector intelligence that can include ranking of coverage areas in the wireless environment of access equipment and/or software, radio link quality and strength associated therewith, or the like. Memory 324 also can store data structures, code instructions and program modules, system or device information, code sequences for scrambling, spreading and pilot transmission, access point configuration, and so on. Processor 316 can be coupled (e.g., through a memory bus), to memory 324 in order to store and retrieve information used to operate and/or confer functionality to the components, platform, and interface that reside within access equipment and/or software.

The network device 300, system, component or device herein can be incorporated into or otherwise part of, an eNB, a UE, or some other type of electronic device in accordance with various examples. Specifically, the electronic device or components or interfaces described herein can be logic and/or circuitry that can be at least partially implemented in one or more of hardware, software, and/or firmware. In examples, the electronic device logic can include radio transmit logic and receive logic (e.g., 310) coupled to control logic (e.g., processor 316). In examples, the transmit and/or receive logic can be elements or modules of transceiver logic 310. The electronic device and/or the components, circuitry or interfaces of such electronic device can be configured to perform operations similar to those described elsewhere in this disclosure.

In one example, the processor 316 can generate or process reduced measurement durations / enhanced measurement gaps for the UE 116 of FIG. 1 while the UE 110 processes non-reduced or non-enhanced measurements gaps, according to configurations provided via the eNB 102. As part of the UE 116, the processor 316 operates to receive an enhanced measurement gap via one or more RRC signals, which are communicated with a bit indication (e.g., a bit indication or set of bits) that indicates / triggers utilizing the enhanced measurement gap for synchronous operation. The UE 116 can process an IE such as a MeasConfig (see, TS 36.331) and obtain or extract the shortMeaslndicator-r14 to determine whether the enhanced measurement gap should be configured or not as part of the measurement gaps for measuring one or more bands, CCs or cells across different frequencies or frequency ranges as part of a measurement gap pattern or sequence.

In another example, the UE 116 can process or eNB 102 generate, via the processor (e.g., 316) therein a DL communication with a MeasObject or measurement object within an IE, which can correspond to one or more CCs, bands, or inter-frequency EUTRA cells. The MeasObjectEUTRA information element can then indicate whether to utilize enhanced measurement gaps (e.g., 2 m or 3 ms), or nonenhanced measurement gaps (e.g., 6 ms). The utilization of the enhanced measurement gaps can further occur in response to being connected to the synchronous network 140, for example, as well as from processing of the MeasObjectEUTRA IE with an indication to utilize the enhanced measurement gap, which is shorter in duration than the non-enhanced measurement gap.

In another example, a new gap configuration can be added to indicate the enhanced measurement gap configurations for synchronous only operation. The measurement gap configuration (MeasGapConfig, see, TS 36.331) can further include a measurement gap configuration corresponding to controlling the setup and release of the enhanced measurement gaps. A gap offset field of the IE can be added with values that correspond to a gap offset (gapOffset) of a measurement gap pattern identifier or ID with a particular MGRP corresponding to a particular shortened duration compared to a non-enhanced measurement gap. For example, a gapOffset value of gpO-short can correspond to a gap offset of a Gap Pattern ID "0" with MGRP = 40 ms with a 2 ms gap duration for measurement. In the same IE a gapOffset of gp1-short can be signaled as corresponding to a Gap Pattern ID "1" with MGRP = 80 ms with 2 ms gap duration for measurement. The gapOffset can also be used to specify the measurement gap pattern to be applied, as defined in TS 36.133.

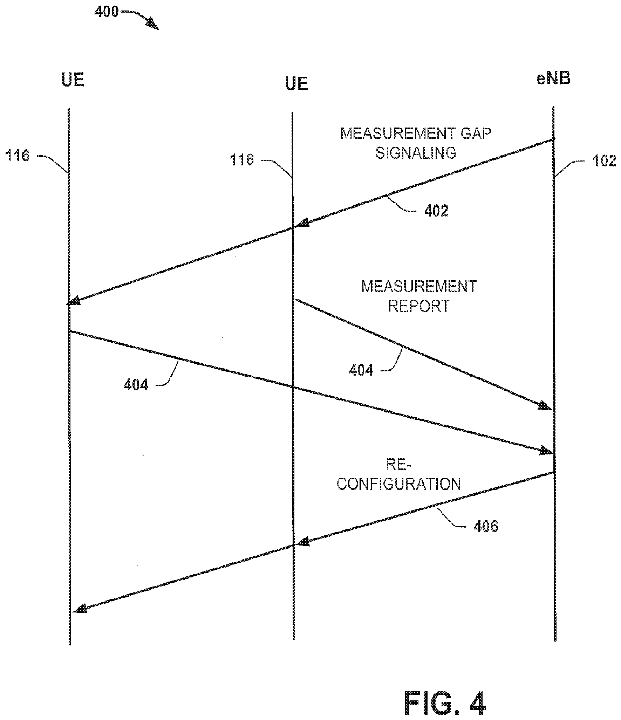

Referring to **FIG. 4****,** illustrated is an example signaling flow between the UEs 110, 116 and the eNB 102 for enhanced measurement gaps. At 402, the UE102 can signal measurement gaps, either as an enhanced measurement gap with shorter lengths (e.g., 2 ms, 3 ms, or otherwise) or non-enhanced measurement gaps with longer durations than the enhanced measurement gaps (e.g., about 6 ms). As discussed above, the UE 110 or 116 can be preconfigured so that when either a measurement gap IE (MeasConfig IE) has a bit indicator (e.g., a Boolean indicator) or set of bits providing an indication based on their status, or a measurement object (MeasObject IE) is received the UEs 110 or 116 can determined from the lEs in an RRC signal whether to apply a non-enhanced measurement gap or not and what duration. The enhanced measurement gap can further be implemented in further response to already having a synchronous connection rather than an asynchronous connection on the network with the eNB 102. Further, the UE 110 can receive a different signaling than the UE 116 so that the UE 110 implements one or more non-enhanced measurement gaps based on the indication status of the IE received via RRC signaling 402, while the UE 116 receives a different IE via RRC signaling 402 to utilize one or more enhanced measurement gaps.

Each UE 110 and 116 can then report 404 measurement data to the eNB 102 based on the measurement gap patterns, the MGRP, a set shortened duration and a configuration of the enhanced measurement gap within the measurement gap configuration information element. In response to the eNB 102 determining that the UE 110 or 116 either no longer benefits from the current measurement gap corresponding to each (enhanced or non-enhanced), the eNB 102 can re-configure or indicate by different status with another information element. For example, if UE 110 enters a synchronous network or obtains a synchronous connection, the eNB 102 can decide to reconfigure an information element, as discussed herein, with a configuration or status indication for an enhanced measurement gap to initiate there. Likewise, a modification of the current measurement gap in the UE 116 can also be made in response to one or more changing network conditions, for example.

While the methods described within this disclosure are illustrated in and described herein as a series of acts or events, it will be appreciated that the illustrated ordering of such acts or events are not to be interpreted in a limiting sense. For example, some acts may occur in different orders and/or concurrently with other acts or events apart from those illustrated and/or described herein. In addition, not all illustrated acts may be required to implement one or more aspects of the description herein. Further, one or more of the acts depicted herein may be carried out in one or more separate acts and/or phases.

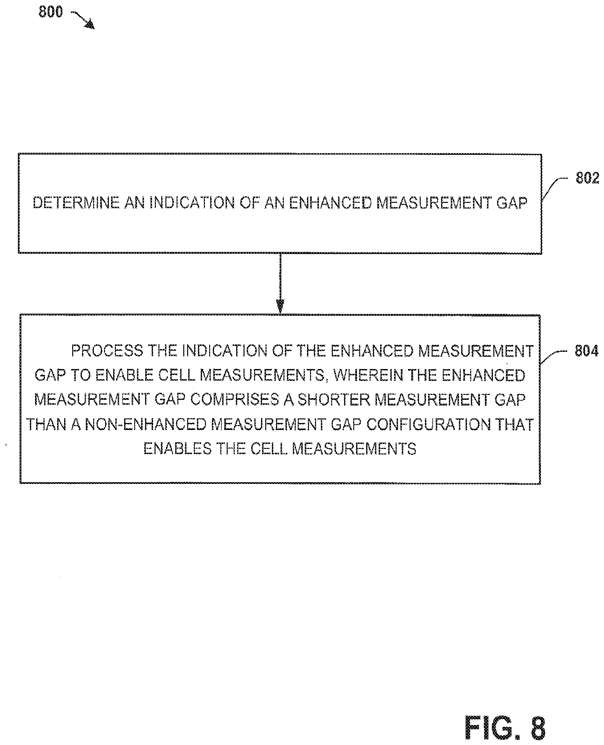

Referring to **FIG. 8****,** illustrated is a process flow for operations to generate or process an enhanced measurement gap in response to instructions of one or more processors of an eNB (e.g., 102) or a user equipment (e.g., 116).

The method 800 initiates at 802 with determining, via the one or more processors, an indication of an enhanced measurement gap.

At 804, the method 800 comprises processing, via the one or more processors on a receive path or on a transmit path, the indication of the enhanced measurement gap to enable cell measurements, wherein the enhanced measurement gap comprises a shorter measurement gap than a non-enhanced measurement gap configuration that enable the cell measurements. As such, the processing can include processing the indication of the enhanced measurement gap with a shorter gap duration than a nonenhanced measurement gap, which enables cell measurements based on the enhanced measurement gap or the non-enhanced measurement gap.

Further, the processing the indication of the enhanced measurement gap is in response to identifying a synchronous network connection to a network device on a synchronous long term evolution (LTE) network.

In another example, the method 800 can further comprise applying the enhanced measurement gap to a first component carrier for the cell measurements and applying a non-enhanced measurement gap to a second component carrier for the cell measurements based on a radio resource control (RRC) signal. The enhanced measurement gap comprises a measurement gap length of about two milliseconds or about three milliseconds, and the non-enhanced measurement gap comprises about six milliseconds.

The method 800 can also comprise identifying whether a bit of an information element indicates whether to utilize the enhanced measurement gap or a non-enhanced measurement gap. While one UE can receive an enhanced measurement gap corresponding thereto, another UE can receive a non-enhanced measurement gap indication as an IE or as a part of a measurement gap configuration, for example. Identifying the indication of the enhanced measurement gap can be performed within an information element that comprises a measurement configuration (MeasConfig), or a MeasObjectEUTRA), or as part of a measurement gap configuration IE.

The method 800 further enables increasing scheduling opportunities configured for enabling the cell measurements at one or more synchronous connections on a synchronous network by applying the enhanced measurement gap for the cell measurements on a synchronous network band based on the indication in an information element of the RRC signal.

As used herein, the term "logic" can refer to, be part of, or include an Application Specific Integrated Circuit (ASIC), an electronic circuit, a processor (shared, dedicated, or group), or memory (shared, dedicated, or group) that execute one or more software or firmware programs, a combinational logic circuit, and/or other suitable hardware components that provide the described functionality. Specifically, the logic can be at least partially implemented in, or an element of, hardware, software, and/or firmware. In some examples, the electronic device logic may be implemented in, or functions associated with the logic may be implemented by, one or more software or firmware modules.

In various examples herein, a system can be a mobile computing device such as, but not limited to, a laptop computing device, a tablet computing device, a netbook, an ultrabook, a smartphone, etc. In various examples, system can have more or less components, and/or different architectures. For example, in some examples the RF logic and/or the baseband logic can be embodied in communication logic (not shown). The communication logic can include one or more single-core or multi-core processors and logic circuits to provide signal processing techniques, for example, encoding, modulation, filtering, converting, amplifying, etc., suitable to the appropriate communication interface over which communications will take place. The communication logic can communicate over wireline, optical, or wireless communication mediums. In examples in which the system is configured for wireless communication, the communication logic can include the RF logic and/or baseband logic to provide for communication compatible with one or more radio technologies. For example, the communication logic can support communication with an evolved universal terrestrial radio access network (EUTRAN) and/or other wireless metropolitan area networks (WMAN), a wireless local area network (WLAN), a wireless personal area network (WPAN).

Embodiments herein can be described as related to the third generation partnership project (3GPP) long term evolution (LTE) or LTE-advanced (LTE-A) standards. For example, terms or entities such as eNodeB (eNB), mobility management entity (MME), user equipment (UE), etc. may be used that may be viewed as LTE-related terms or entities. However, in other embodiments the technology may be used in or related to other wireless technologies such as the Institute of Electrical and Electronic Engineers (IEEE) 802.16 wireless technology (WiMax), IEEE 802.11 wireless technology (WiFi), various other wireless technologies such as global system for mobile communications (GSM), enhanced data rates for GSM evolution (EDGE), GSM EDGE radio access network (GERAN), universal mobile telecommunications system (UMTS), UMTS terrestrial radio access network (UTRAN), or other 2G, 3G, 4G, 5G, etc. technologies either already developed or to be developed. In those embodiments, where LTE-related terms such as eNB, MME, UE, etc. are used, one or more entities or components may be used that may be considered to be equivalent or approximately equivalent to one or more of the LTE-based terms or entities.

As it employed in the subject specification, the term "processor" can refer to substantially any computing processing unit or device including, but not limited to including, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit, a digital signal processor, a field programmable gate array, a programmable logic controller, a complex programmable logic device, a discrete gate or transistor logic, discrete hardware components, or any combination thereof designed to perform the functions and/or processes described herein. Processors can exploit nano-scale architectures such as, but not limited to, molecular and quantum-dot based transistors, switches and gates, in order to optimize space usage or enhance performance of mobile devices. A processor may also be implemented as a combination of computing processing units.

In the subject specification, terms such as "store," "data store," data storage," "database," and substantially any other information storage component relevant to operation and functionality of a component and/or process, refer to "memory components," or entities embodied in a "memory," or components including the memory. It is noted that the memory components described herein can be either volatile memory or nonvolatile memory, or can include both volatile and nonvolatile memory.

By way of illustration, and not limitation, nonvolatile memory, for example, can be included in a memory, non-volatile memory, disk storage, and memory storage. Further, nonvolatile memory can be included in read only memory, programmable read only memory, electrically programmable read only memory, electrically erasable programmable read only memory, or flash memory. Volatile memory can include random access memory, which acts as external cache memory. By way of illustration and not limitation, random access memory is available in many forms such as synchronous random access memory, dynamic random access memory, synchronous dynamic random access memory, double data rate synchronous dynamic random access memory, enhanced synchronous dynamic random access memory, Synchlink dynamic random access memory, and direct Rambus random access memory. Additionally, the disclosed memory components of systems or methods herein are intended to include, without being limited to including, these and any other suitable types of memory.

Examples can include subject matter such as a method, means for performing acts or blocks of the method, at least one machine-readable medium including instructions that, when performed by a machine cause the machine to perform acts of the method or of an apparatus or system for concurrent communication using multiple communication technologies according to examples described herein.

It is to be understood that aspects described herein can be implemented by hardware, software, firmware, or any combination thereof. When implemented in software, functions can be stored on or transmitted over as one or more instructions or code on a computer-readable medium. Computer-readable media includes both computer storage media and communication media including any medium that facilitates transfer of a computer program from one place to another. A storage media or a computer readable storage device can be any available media that can be accessed by a general purpose or special purpose computer. By way of example, and not limitation, such computer-readable media can comprise RAM, ROM, EEPROM, CDROM or other optical disk storage, magnetic disk storage or other magnetic storage devices, or other tangible and/or non-transitory medium, that can be used to carry or store desired information or executable instructions. Also, any connection is properly termed a computer-readable medium. For example, if software is transmitted from a website, server, or other remote source using a coaxial cable, fiber optic cable, twisted pair, digital subscriber line (DSL), or wireless technologies such as infrared, radio, and microwave, then coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while *discs* reproduce data optically with lasers. Combinations of the above should also be included within the scope of computer-readable media.

Various illustrative logics, logical blocks, modules, and circuits described in connection with aspects disclosed herein can be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform functions described herein. A general-purpose processor can be a microprocessor, but, in the alternative, processor can be any conventional processor, controller, microcontroller, or state machine. A processor can also be implemented as a combination of computing devices, for example, a combination of a DSP and a microprocessor, a plurality of microprocessors, one or more microprocessors in conjunction with a DSP core, or any other such configuration. Additionally, at least one processor can comprise one or more modules operable to perform one or more of the s and/or actions described herein.

For a software implementation, techniques described herein can be implemented with modules *(e.g*., procedures, functions, and so on) that perform functions described herein. Software codes can be stored in memory units and executed by processors. Memory unit can be implemented within processor or external to processor, in which case memory unit can be communicatively coupled to processor through various means as is known in the art. Further, at least one processor can include one or more modules operable to perform functions described herein.

Techniques described herein can be used for various wireless communication systems such as CDMA, TDMA, FDMA, OFDMA, SC-FDMA and other systems. The terms "system" and "network" are often used interchangeably. A CDMA system can implement a radio technology such as Universal Terrestrial Radio Access (UTRA), CDMA1800, *etc.* UTRA includes Wideband-CDMA (W-CDMA) and other variants of CDMA. Further, CDMA1800 covers IS-1800, IS-95 and IS-856 standards. A TDMA system can implement a radio technology such as Global System for Mobile Communications (GSM). An OFDMA system can implement a radio technology such as Evolved UTRA (E-UTRA), Ultra Mobile Broadband (UMB), IEEE 802.11 (Wi-Fi), IEEE 802.16 (WiMAX), IEEE 802.18, Flash-OFDML, *etc.* UTRA and E-UTRA are part of Universal Mobile Telecommunication System (UMTS). 3GPP Long Term Evolution (LTE) is a release of UMTS that uses E-UTRA, which employs OFDMA on downlink and SC-FDMA on uplink. UTRA, E-UTRA, UMTS, LTE and GSM are described in documents from an organization named "3rd Generation Partnership Project" (3GPP). Additionally, CDMA1800 and UMB are described in documents from an organization named "3rd Generation Partnership Project 2" (3GPP2). Further, such wireless communication systems can additionally include peer-to-peer *{e.g.*, mobile-to-mobile) ad hoc network systems often using unpaired unlicensed spectrums, 802.xx wireless LAN, BLUETOOTH and any other short- or long- range, wireless communication techniques.

Single carrier frequency division multiple access (SC-FDMA), which utilizes single carrier modulation and frequency domain equalization is a technique that can be utilized with the disclosed aspects. SC-FDMA has similar performance and essentially a similar overall complexity as those of OFDMA system. SC-FDMA signal has lower peakto-average power ratio (PAPR) because of its inherent single carrier structure. SC-FDMA can be utilized in uplink communications where lower PAPR can benefit a mobile terminal in terms of transmit power efficiency.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices *{e.g.*, hard disk, floppy disk, magnetic strips, *etc.),* optical disks *{e.g.*, compact disk (CD), digital versatile disk (DVD), *etc.),* smart cards, and flash memory devices *{e.g.*, EPROM, card, stick, key drive, *etc.).* Additionally, various storage media described herein can represent one or more devices and/or other machine-readable media for storing information. The term "machine-readable medium" can include, without being limited to, wireless channels and various other media capable of storing, containing, and/or carrying instruction(s) and/or data. Additionally, a computer program product can include a computer readable medium having one or more instructions or codes operable to cause a computer to perform functions described herein.

Communications media embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

Further, the actions of a method or algorithm described in connection with aspects disclosed herein can be embodied directly in hardware, in a software module executed by a processor, or a combination thereof. A software module can reside in RAM memory, flash memory, ROM memory, EPROM memory, EEPROM memory, registers, a hard disk, a removable disk, a CD-ROM, or any other form of storage medium known in the art. An exemplary storage medium can be coupled to processor, such that processor can read information from, and write information to, storage medium. In the alternative, storage medium can be integral to processor. Further, in some aspects, processor and storage medium can reside in an ASIC. Additionally, ASIC can reside in a user terminal. In the alternative, processor and storage medium can reside as discrete components in a user terminal. Additionally, in some aspects, the acts or actions of a method or algorithm can reside as one or any combination or set of codes and/or instructions on a machine-readable medium and/or computer readable medium, which can be incorporated into a computer program product.

The above description of illustrated examples of the subject disclosure, including what is described in the Abstract, is not intended to be exhaustive or to limit the disclosed examples to the precise forms disclosed. While specific embodiments and examples are described herein for illustrative purposes, various modifications are possible that are considered within the scope of such embodiments and examples, as those skilled in the relevant art can recognize.

In this regard, while the disclosed subject matter has been described in connection with various examples and corresponding Figures, where applicable, it is to be understood that other similar examples can be used or modifications and additions can be made to the described embodiments for performing the same, similar, alternative, or substitute function of the disclosed subject matter without deviating therefrom. Therefore, the disclosed subject matter should not be limited to any single example described herein, but rather should be construed in breadth and scope in accordance with the appended claims below.

In particular regard to the various functions performed by the above described components (assemblies, devices, circuits, systems, *etc.),* the terms (including a reference to a "means") used to describe such components are intended to correspond, unless otherwise indicated, to any component or structure which performs the specified function of the described component *{e.g.*, that is functionally equivalent), even though not structurally equivalent to the disclosed structure which performs the function in the herein illustrated exemplary implementations of the disclosure. In addition, while a particular feature may have been disclosed with respect to only one of several implementations, such feature may be combined with one or more other features of the other implementations as may be desired and advantageous for any given or particular application.

## Claims

1. An apparatus configured to be employed in an evolved NodeB, eNB, (102) comprising one or more processors configured to:
generate a first downlink communication to a first user equipment, UE, configured to indicate an enhanced measurement gap that is different than a non-enhanced measurement gap that is communicated to a second UE, wherein the first UE and the second UE are communicatively coupled to the eNB via a synchronous connection of a synchronous network (140);
communicate the enhanced measurement gap via one or more radio resource control, RRC, signals (402) with a short measurement indication for release 14, shortMeaslndicator-r14, (502) in a measurement configuration, MeasConfig, information element, wherein the enhanced measurement gap is signaled by a single bit of the shortMeaslndicator-r14 to indicate whether the enhanced measurement gap as a gap offset corresponding to a measurement gap pattern signaled in the MeasConfig information element is active or inactive for the first UE, wherein the enhanced measurement gap is shorter than the non-enhanced measurement gap and comprises 2 ms or 3 ms and is utilized by the first UE in response to being connected to the synchronous network.

2. The apparatus of claim 1, wherein the MeasConfig is configured to further indicate measurements to be performed based on at least one of: an inter-frequency or an inter-radio access technology, inter-RAT, mobility, and configuration of one or more measurement gaps or measurement gap patterns.

3. The apparatus of any one of claims 1-2, wherein the one or more processors are further configured to generate a measurement object of an evolved universal terrestrial radio access, MeasObjectEUTRA, interface within an information element that indicates that the enhanced measurement gap is active to the first UE and inactive to the second UE based on a bit, and the MeasObjectEUTRA is configured to further indicate measurements to be performed based on an inter-frequency of evolved universal terrestrial radio access, EUTRA, cells.

4. The apparatus of any one of claims 1-3, wherein the one or more processors are further configured to generate a MeasGapConfig within an information element configured specify that the enhanced measurement gap, corresponds to different measurement gap patterns utilizing the gap offset for a UE measurement.

5. An apparatus configured to be employed in a user equipment, UE, comprising one or more processors configured to:
process one or more radio resource control, RRC, signals received from an evolved NodeB, eNB, of one or more communication chains corresponding to one or more component carriers, CCs; and
process the one or more RRC signals with a short measurement indication for release 14, shortMeaslndicator-r14, (502) in a measurement configuration, MeasConfig, information element and determine whether to apply an enhanced measurement gap based on the one or more RRC signals, wherein the enhanced measurement gap is signaled by a single bit of the shortMeaslndicator-r14 to indicate whether the enhanced measurement gap as a gap offset corresponding to a measurement gap pattern signaled in the MeasConfig information element is active or inactive, wherein the enhanced measurement gap is shorter than a non-enhanced measurement gap and comprises 2 ms or 3 ms and is utilized by the UE in response to being connected to a synchronous network (140).

6. The apparatus of claim 5, wherein the one or more processors are further configured to apply the enhanced measurement gap comprising a shorter measurement gap duration than the non-enhanced measurement gap by generating cell measurements within the shorter measurement gap duration in response to residing in the synchronized network (140).

7. The apparatus of claim 5 or 6, wherein the one or more processors are further configured to apply the enhanced measurement gap to a first component carrier for the cell measurements and apply the non-enhanced measurement gap to a second component carrier for the cell measurements based on the one or more RRC signals.

8. The apparatus of any one of claims 5-7, wherein the measurement configuration, MeasConfig, comprises indications to perform measurements based on at least one of an inter-frequency or an inter-radio access technology, inter-RAT, mobility, and further comprising one or more other indications of the non-enhanced measurement gap or a measurement gap pattern.

9. The apparatus of any one of claims 5-8, whereina measurement object of an evolved universal terrestrial radio access, MeasObjectEUTRA, interface indicates that the enhanced measurement gap is active, and whether the cell measurements are based on an inter-frequency of evolved universal terrestrial radio access, EUTRA, cells.

10. The apparatus of any one of claims 5-9, wherein the one or more processors are further configured to increase scheduling opportunities configured for generating measurements of one or more synchronous connections on a synchronous network (140) by applying the enhanced measurement gap to cell measurements based on an information element of the one or more RRC signals.

11. A computer-readable medium comprising executable instructions that, in response to execution, cause one or more processors of an evolved NodeB, eNB, (102) communicating with a user equipment, UE, or one or more processors of the UE, to perform operations, the operations comprising:
determining, via the one or more processors, an indication of an enhanced measurement gap; and
processing, via the one or more processors of the UE on a receive path or via the one or more processors of the eNB on a transmit path a radio resource control, RRC, signal with a short measurement indication for release 14, shortMeaslndicator-r14, (502) in a measurement configuration, MeasConfig, information element comprising the indication of the enhanced measurement gap to enable cell measurements, wherein the enhanced measurement gap comprises a shorter measurement gap than a non-enhanced measurement gap to enable the cell measurements, wherein the enhanced measurement gap is signaled by a single bit of the shortMeaslndicator to indicate whether the enhanced measurement gap as a gap offset corresponding to a measurement gap pattern signaled in the MeasConfig information element is active or inactive, wherein the enhanced measurement gap comprises 2 ms or 3 ms, and is utilized by the UE in response to being connected to a synchronous network (140).

12. The computer-readable medium of claim 11, wherein processing the indication of the enhanced measurement gap is in response to identifying a synchronous network (140) connection to a network device on a synchronous long term evolution, LTE, network.

13. The computer-readable medium of any one of claims 11-12, wherein the operations further comprise:
processing a measurement gap configuration, MeasGapConfig, configured to specify a plurality of measurement gaps patterns corresponding to different gap offsets that specify durations for each measurement gap repetition/reception period, MGRP, based on the indication of the enhanced measurement gap.

14. The computer-readable medium of any one of claims 11-13, wherein the operations further comprise:
increasing scheduling opportunities configured for enabling the cell measurements at one or more synchronous connections on the synchronous network (140) by applying the enhanced measurement gap for the cell measurements on a synchronous network band based on the indication in an information element of the RRC signal.

## Patentansprüche

1. Vorrichtung, die konfiguriert ist, um in einem evolved NodeB, eNB, (102) eingesetzt zu werden, umfassend einen oder mehrere Prozessoren, die konfiguriert sind zum:
Erzeugen einer ersten Downlink-Kommunikation an ein erstes Benutzergerät, UE, das konfiguriert ist, um eine erweiterte Messlücke anzuzeigen, die sich von einer nicht erweiterten Messlücke unterscheidet, die an ein zweites UE kommuniziert wird, wobei das erste UE und das zweite UE kommunikativ mit dem eNB über eine synchrone Verbindung eines synchronen Netzwerks (140) gekoppelt sind;
Kommunizieren der erweiterten Messlücke über ein oder mehrere Funkressourcensteuerungs-, RRC-, Signale (402) mit einer kurzen Messanzeige für Release 14, shortMeasIndicator-r14, (502) in einem Messkonfigurations-, MeasConfig-, Informationselement, wobei die erweiterte Messlücke durch ein einzelnes Bit des shortMeasIndicator-r14 signalisiert wird, um anzuzeigen, ob die erweiterte Messlücke als ein Lückenversatz, der einem Messlückenmuster entspricht, das in dem MeasConfig-Informationselement signalisiert wird, für das erste UE aktiv oder inaktiv ist, wobei die erweiterte Messlücke kürzer als die nicht erweiterte Messlücke ist und 2 ms oder 3 ms umfasst und durch das erste UE als Reaktion darauf, dass es mit dem synchronen Netzwerk verbunden ist, verwendet wird.

2. Vorrichtung nach Anspruch 1, wobei die MeasConfig konfiguriert ist, um ferner anzuzeigen, dass Messungen basierend auf mindestens einem von Folgendem durchzuführen sind: einer Interfrequenz- oder einer Interfunkzugangstechnologie-, Inter-RAT-, Mobilität und Konfiguration einer oder mehrerer Messlücken oder Messlückenmuster.

3. Vorrichtung nach einem der Ansprüche 1-2, wobei der eine oder die mehreren Prozessoren ferner konfiguriert sind, um ein Messobjekt einer evolved universal terrestrial radio access, MeasObjectEUTRA, Schnittstelle innerhalb eines Informationselements zu erzeugen, das anzeigt, dass die erweiterte Messlücke für das erste UE aktiv und für das zweite UE inaktiv ist, basierend auf einem Bit, und die MeasObjectEUTRA konfiguriert ist, um ferner anzuzeigen, dass Messungen basierend auf einer Interfrequenz von evolved universal terrestrial radio access, EUTRA, Zellen durchzuführen sind.

4. Vorrichtung nach einem der Ansprüche 1-3, wobei der eine oder die mehreren Prozessoren ferner konfiguriert sind, um eine MeasGapConfig innerhalb eines Informationselements zu erzeugen, das konfiguriert ist, um anzugeben, dass die erweiterte Messlücke verschiedenen Messlückenmustern entspricht, die den Lückenversatz für eine UE-Messung verwenden.

5. Vorrichtung, die konfiguriert ist, um in einem Benutzergerät, UE, eingesetzt zu werden, umfassend einen oder mehrere Prozessoren, die konfiguriert sind zum:
Verarbeiten eines oder mehrerer Funkressourcensteuerungs-, RRC-, Signale, die von einem evolved NodeB, eNB, einer oder mehrerer Kommunikationsketten empfangen werden, die einem oder mehreren Komponententrägern, CCS, entsprechen; und
Verarbeiten des einen oder der mehreren RRC-Signale mit einer kurzen Messanzeige für Release 14, shortMeasIndicator-r14, (502) in einem Messkonfigurations-, MeasConfig-, Informationselement und Bestimmen, ob eine erweiterte Messlücke basierend auf dem einen oder den mehreren RRC-Signalen angewendet werden soll,
wobei die erweiterte Messlücke durch ein einzelnes Bit des shortMeasIndicator-r14 signalisiert wird, um anzuzeigen, ob die erweiterte Messlücke als ein Lückenversatz,
der einem Messlückenmuster entspricht, das in dem MeasConfig-Informationselement signalisiert wird, aktiv oder inaktiv ist, wobei die erweiterte Messlücke kürzer als eine nicht erweiterte Messlücke ist und 2 ms oder 3 ms umfasst und durch das UE als Reaktion darauf, dass es mit einem synchronen Netzwerk (140) verbunden ist, verwendet wird.

6. Vorrichtung nach Anspruch 5, wobei der eine oder die mehreren Prozessoren ferner konfiguriert sind, um die erweiterte Messlücke, die eine kürzere Messlückendauer als die nicht erweiterte Messlücke umfasst, durch Erzeugen von Zellmessungen innerhalb der kürzeren Messlückendauer als Reaktion auf das Verweilen im synchronisierten Netzwerk (140) anzuwenden.

7. Vorrichtung nach Anspruch 5 oder 6, wobei der eine oder die mehreren Prozessoren ferner konfiguriert sind, um die erweiterte Messlücke auf einen ersten Komponententräger für die Zellmessungen anzuwenden und die nicht erweiterte Messlücke auf einen zweiten Komponententräger für die Zellmessungen basierend auf dem einen oder den mehreren RRC-Signalen anzuwenden.

8. Vorrichtung nach einem der Ansprüche 5-7, wobei die Messkonfiguration, MeasConfig, Anzeigen umfasst, um Messungen basierend auf mindestens einem von einer Interfrequenz- oder einer Interfunkzugangstechnologie-, Inter-RAT-, Mobilität durchzuführen, und ferner umfassend eine oder mehrere andere Anzeigen der nicht erweiterten Messlücke oder eines Messlückenmusters.

9. Vorrichtung nach einem der Ansprüche 5-8, wobei ein Messobjekt einer evolved universal terrestrial radio access, MeasObjectEUTRA, Schnittstelle anzeigt, dass die erweiterte Messlücke aktiv ist, und ob die Zellmessungen auf einer Interfrequenz von evolved universal terrestrial radio access, EUTRA, Zellen basieren.

10. Vorrichtung nach einem der Ansprüche 5-9, wobei der eine oder die mehreren Prozessoren ferner konfiguriert sind, um Planungsmöglichkeiten zu erhöhen, die zum Erzeugen von Messungen einer oder mehrerer synchroner Verbindungen auf einem synchronen Netzwerk (140) durch Anwenden der erweiterten Messlücke auf Zellmessungen basierend auf einem Informationselement des einen oder der mehreren RRC-Signale konfiguriert sind.

11. Computerlesbares Medium, umfassend ausführbare Anweisungen, die als Reaktion auf Ausführung einen oder mehrere Prozessoren eines evolved NodeB, eNB, (102), der mit einem Benutzergerät, UE, kommuniziert, oder einen oder mehrere Prozessoren des UE veranlassen, Operationen durchzuführen, wobei die Operationen umfassen:
Bestimmen, über den einen oder die mehreren Prozessoren, einer Angabe einer erweiterten Messlücke; und
Verarbeiten, über den einen oder die mehreren Prozessoren des UE auf einem Empfangspfad oder über den einen oder die mehreren Prozessoren des eNB auf einem Sendepfad, eines Funkressourcensteuerungs-, RRC-, Signals mit einer kurzen Messanzeige für Release 14, shortMeasIndicator-r14, (502) in einem Messkonfigurations-, MeasConfig-, Informationselement, das die Angabe der erweiterten Messlücke umfasst, um Zellmessungen zu ermöglichen, wobei die erweiterte Messlücke eine kürzere Messlücke als eine nicht erweiterte Messlücke umfasst, um die Zellmessungen zu ermöglichen, wobei die erweiterte Messlücke durch ein einzelnes Bit des shortMeasIndicator signalisiert wird, um anzuzeigen, ob die erweiterte Messlücke als ein Lückenversatz, der einem Messlückenmuster entspricht, das in dem MeasConfig-Informationselement signalisiert wird, aktiv oder inaktiv ist, wobei die erweiterte Messlücke 2 ms oder 3 ms umfasst und durch das UE als Reaktion darauf, dass es mit einem synchronen Netzwerk (140) verbunden ist, verwendet wird.

12. Computerlesbares Medium nach Anspruch 11, wobei das Verarbeiten der Angabe der erweiterten Messlücke als Reaktion auf das Identifizieren einer synchronen Netzwerkverbindung (140) mit einer Netzwerkvorrichtung auf einem synchronen Long Term Evolution, LTE, Netzwerk erfolgt.

13. Computerlesbares Medium nach einem der Ansprüche 11-12, wobei die Operationen ferner umfassen:
Verarbeiten einer Messlückenkonfiguration, MeasGapConfig, die konfiguriert ist, um eine Vielzahl von Messlückenmustern anzugeben, die verschiedenen Lückenversätzen entsprechen, die Dauern für jede Messlückenwiederholungs-/Empfangsperiode, MGRP, basierend auf der Angabe der erweiterten Messlücke, angeben.

14. Computerlesbares Medium nach einem der Ansprüche 11-13, wobei die Operationen ferner umfassen:
Erhöhen von Planungsmöglichkeiten, die zum Ermöglichen der Zellmessungen an einer oder mehreren synchronen Verbindungen auf dem synchronen Netzwerk (140) durch Anwenden der erweiterten Messlücke für die Zellmessungen auf einem synchronen Netzwerkband basierend auf der Angabe in einem Informationselement des RRC-Signals konfiguriert sind.

## Revendications

1. Un appareil configuré pour être utilisé dans un noeud B évolué, eNB, (102) comprenant un ou plusieurs processeurs configurés pour :
générer une première communication de liaison descendante vers un premier équipement utilisateur, UE, configurée pour indiquer un intervalle de mesure amélioré qui est différent d'un intervalle de mesure non amélioré qui est communiqué à un second UE, dans lequel le premier UE et le second UE sont couplés de manière communicante à l'eNB via une connexion synchrone d'un réseau synchrone (140) ;
communiquer l'intervalle de mesure amélioré via un ou plusieurs signaux de contrôle de ressources radio, RRC, (402) avec une indication de mesure courte release 14, shortMeasIndicator-r14, (502) dans un élément d'information de configuration de mesure, MeasConfig, dans lequel l'intervalle de mesure amélioré est signalé par un unique bit du shortMeasIndicator-r14 pour indiquer si l'intervalle de mesure amélioré en tant que décalage d'intervalle correspondant à un profil d'intervalle de mesure signalé dans l'élément d'information MeasConfig est actif ou inactif pour le premier UE, dans lequel l'intervalle de mesure amélioré est plus court que l'intervalle de mesure non amélioré et est de 2 ms ou 3 ms et est utilisé par le premier UE en réponse à une connexion en cours au réseau synchrone.

2. L'appareil selon la revendication 1, dans lequel la MeasConfig est configurée pour indiquer en outre des mesures à réaliser sur la base d'au moins une parmi : une mobilité inter-fréquence ou inter-technologie d'accès radio, inter-RAT, et une configuration d'un ou plusieurs intervalles de mesure ou de profils d'intervalle de mesure.

3. L'appareil selon l'une des revendications 1 à 2, dans lequel les un ou plusieurs processeurs sont configurés en outre pour générer un objet de mesure d'une interface d'accès radio terrestre universel évolué, MeasObjectEUTRA, à l'intérieur d'un élément d'information qui indique que l'intervalle de mesure amélioré est actif pour le premier UE et inactif pour le second UE sur la base d'un bit, et le MeasObjectEUTRA est configuré pour indiquer en outre des mesures à réaliser sur la base d'une inter-fréquence de cellules d'accès radio terrestre universel évolué, EUTRA.

4. L'appareil selon l'une des revendications 1 à 3, dans lequel les un ou plusieurs processeurs sont configurés en outre pour générer un MeasGapConfig à l'intérieur d'un élément d'information configuré pour spécifier que l'intervalle de mesure amélioré correspond à des profils d'intervalle de mesure différents utilisant le décalage d'intervalle pour une mesure d'UE.

5. Un appareil configuré pour être utilisé dans un équipement utilisateur, UE, comprenant un ou plusieurs processeurs configurés pour :
traiter un ou plusieurs signaux de contrôle de ressources radio, RRC, reçus en provenance d'un noeud B évolué, eNB, d'une ou plusieurs chaînes de communication correspondant à une ou plusieurs porteuses composantes, CC ; et
traiter les un ou plusieurs signaux RRC avec une indication de mesure courte release 14, shortMeasIndicator-r14, (502) dans un élément d'information de configuration de mesure, MeasConfig, et déterminer s'il y a lieu d'appliquer ou non un intervalle de mesure amélioré sur la base des un ou plusieurs signaux RRC, dans lequel l'intervalle de mesure amélioré est signalé par un unique bit du shortMeasIndicator-r14 pour indiquer si l'intervalle de mesure amélioré en tant que décalage d'intervalle correspondant à un profil d'intervalle de mesure signalé dans l'élément d'information MeasConfig est actif ou inactif, dans lequel l'intervalle de mesure amélioré est plus court qu'un intervalle de mesure non amélioré et est de 2 ms ou 3 ms et est utilisé par l'UE en réponse à la connexion en cours à un réseau synchrone (140).

6. L'appareil selon la revendication 5, dans lequel les un ou plusieurs processeurs sont configurés en outre pour appliquer l'intervalle de mesure amélioré comprenant une durée d'intervalle de mesure plus courte que l'intervalle de mesure non amélioré en générant des mesures de cellule à l'intérieur de la durée d'intervalle de mesure plus courte en réponse à la présence en cours dans le réseau synchronisé (140).

7. L'appareil selon la revendication 5 ou 6, dans lequel les un ou plusieurs processeurs sont configurés en outre pour appliquer l'intervalle de mesure amélioré à une première porteuse composante pour les mesures de cellule, et appliquer l'intervalle de mesure non amélioré à une seconde porteuse composante pour les mesures de cellule sur la base des un ou plusieurs signaux RRC.

8. L'appareil selon une des revendications 5 à 7, dans lequel la configuration de mesure, MeasConfig, comprend des indications pour réaliser des mesures sur la base d'au moins une parmi une mobilité inter-fréquence ou inter-technologie d'accès radio, inter-RAT, et comprenant en outre une ou plusieurs autres indications de l'intervalle de mesure non amélioré ou d'un profil d'intervalle de mesure.

9. L'appareil selon une des revendications 5 à 8, dans lequel un objet de mesure d'une interface d'accès radio terrestre universel évolué, MeasObjectEUTRA, indique que l'intervalle de mesure amélioré est actif et si les mesures de cellule sont ou non basées sur une inter-fréquence de cellules d'accès radio terrestre universel évolué, EUTRA.

10. L'appareil selon une des revendications 5 à 9, dans lequel les un ou plusieurs processeurs sont configurés en outre pour augmenter des opportunités de planification configurées pour générer des mesures d'une ou plusieurs connexions synchrones sur un réseau synchrone (140) en appliquant l'intervalle de mesure amélioré à des mesures de cellule sur la base d'un élément d'information des un ou plusieurs signaux RRC.

11. Un support lisible par calculateur comprenant des instructions exécutables qui, en réponse à leur exécution, amènent un ou plusieurs processeurs d'un noeud B évolué, eNB, (102) communiquant avec un équipement utilisateur, UE, ou un ou plusieurs processeurs de l'UE, à réaliser des opérations, les opérations comprenant :
la détermination, via les un ou plusieurs processeurs, d'une indication d'un intervalle de mesure amélioré ; et
le traitement, via les un ou plusieurs processeurs de l'UE sur un trajet de réception, ou via les un ou plusieurs processeurs de l'eNB sur un trajet d'émission, d'un signal de contrôle de ressources radio, RRC, avec une indication de mesure courte release 14, shortMeasIndicator-r14, (502) dans un élément d'information de configuration de mesure, MeasConfig, comprenant l'indication de l'intervalle de mesure amélioré pour permettre des mesures de cellule, dans lequel l'intervalle de mesure amélioré comprend un intervalle de mesure plus court qu'un intervalle de mesure non amélioré pour permettre les mesures de cellule, dans lequel l'intervalle de mesure amélioré est signalé par un unique bit du shortMeasIndicator pour indiquer si l'intervalle de mesure amélioré en tant que décalage d'intervalle correspondant à un profil d'intervalle de mesure signalé dans l'élément d'information MeasConfig est actif ou inactif, dans lequel l'intervalle de mesure amélioré est de 2 ms ou 3 ms et est utilisé par l'UE en réponse à une connexion en cours à un réseau synchrone (140) .

12. Le support lisible par calculateur selon la revendication 11, dans lequel le traitement de l'indication de l'intervalle de mesure amélioré est en réponse à l'identification d'une connexion de réseau synchrone (140) à un dispositif de réseau sur un réseau Évolution à long terme, LTE, synchrone.

13. Le support lisible par calculateur selon une des revendications 11 à 12, dans lequel les opérations comprennent en outre :
le traitement d'une configuration d'intervalle de mesure, MeasGapConfig, configuré pour spécifier une pluralité de profils d'intervalle de mesure correspondant à différents décalages d'intervalle qui spécifient des durées pour chaque période de réception/répétition d'intervalle de mesure, MGRP, sur la base de l'indication de l'intervalle de mesure amélioré.

14. Le support lisible par calculateur selon une des revendications 11 à 13, dans lequel les opérations comprennent en outre :
l'augmentation d'opportunités de planification configurées pour permettre les mesures de cellule au niveau d'une ou plusieurs connexions synchrones sur le réseau synchrone (140) en appliquant l'intervalle de mesure amélioré pour les mesures de cellule sur une bande de réseau synchrone sur la base de l'indication dans un élément d'information du signal RRC.
